# EUROPÄISCHE PATENTANMELDUNG

(11) **EP 2 006 713 A1**
(43) Veröffentlichungstag der Anmeldung: **24.12.2008**
(21) Anmeldenummer: 08104440.6
(22) Anmeldetag: 17.06.2008
(51) Int. Cl.: G02B 5/20, G02B 5/22, G02B 7/00

(54) **UV-Strahlungsanlage**

(30) Priorität: 22.06.2007 DE 102007029330
(71) Anmelder: Printworld GmbH, 32689 Kalletal (DE)
(72) Erfinder: Schrage, Volker, 32689 Kalletal (DE)
(74) Vertreter: Kohlmann, Kai

(57) **Zusammenfassung**

Die Erfindung betrifft einen Infrarotsperrfilter zur Anordnung im Strahlengang einer Vorrichtung zum UV-Strahlungshärten wärmeempfindlicher Objekte.

Um einen Filter zu schaffen, der mit hohem Wirkungsgrad die Infrarot-Strahlung der Strahlungsquelle ausfiltert und gleichzeitig eine zu starke Erwärmung des Filters selbst vermeidet, wird vorgeschlagen, dass die für die Härtung problematische Infrarotstrahlung nicht reflektiert, sondern in dem homogenen Infrarotsperrfilter absorbiert wird. Die von dem Infrarotsperrfilter aufgenommene Wärme wird fortlaufend von einem Kühlmedium abtransportiert.

## Beschreibung

Die Erfindung betrifft einen Infrarotsperrfilter Infrarotsperrfilter zur Anordnung im Strahlengang einer Vorrichtung zum UV-Strahlungshärten wärmeempfindlicher Objekte, wobei der Infrarotsperrfilter in einem hohlzylindrischen Kanal angeordnet ist und der Kanal zumindest teilweise aus einem für elektromagnetische Strahlung durchlässigem Material besteht.

Derartige Anordnungen zum UV-Strahlungshärten finden Verwendung bei der Beschichtung von Objekten aus wärmeempfindlichen Materialien, insbesondere Kunststoffen, die mit UV-Lacken und Druckfarben beschichtet werden. Die Objekte können beispielsweise als Formkörper, wie beispielsweise Flaschen oder Scheiben oder als Folien und Bahnen vorliegen. Typische scheibenförmige Formkörper sind beispielsweise optische Informationsträger, wie beispielsweise Digital Versatile Disks (DVD's).

Um die UV-härtenden Beschichtungen in kurzen Zykluszeiten von hochproduktiven Fertigungslinien härten zu können, ist eine hohe UV-Lichtintensität notwendig. Üblicherweise wird zur Strahlungshärtung UV-Licht im Wellenlängenbereich von 200 - 400 nm eingesetzt. Hierzu kommen UV-Strahlungsquellen, üblicherweise UV-Mitteldruck-Gasentladungslampen zum Einsatz. Neben der zur Härtung erforderlichen UV-Strahlung strahlen derartige Strahlungsquellen auch die langwellige Wärmstrahlung (Infrarot-Strahlung/IR-Strahlung) ab. Die langwellige Wärmestrahlung ist jedoch bei wärmeempfindlichen Objekten unerwünscht und kann zu einer Verformung und/oder Versprödung des Objektes führen.

In der DE 90 14 652.2 U1 und in DE 440 942.6 A1 werden Anordnungen gezeigt, die die Wärmebelastung des Objektes durch einen Wärmefilter im direkten Strahlengang senken. Diese Wärmefilter bestehen aus einer beschichteten Quarzglasscheibe und reduzieren die Infrarot-Strahlung auf das Substrat nur geringfügig. Außerdem wird von der Quarzglasscheibe auch ein Teil der UV-Strahlung absorbiert. Der Hauptnachteil der bekannten Filter besteht jedoch darin, dass sich die beschichteten Quarzglasscheiben stark aufheizen und damit selbst zur Strahlungsquelle für Infrarotstrahlung werden.

Aus der DE 28 30 870 A1 ist ein Verfahren und eine Vorrichtung zum Trocknen von Fotoentwicklungstinten mit ultraviolettem Licht bekannt. Die Wärme stellt bei der Aushärtung und Trocknung der Ultravioletttinten ein Problem dar. Um diesem Wärmeproblem wird vorgeschlagen, im Strahlengang einer von einem Reflektor umgebenen Quecksilberdampflampe ein aus Quarzglas bestehendes Rohr anzuordnen, das ein flüssiges Infrarotfiltermedium, insbesondere Wasser, enthält, das durch das Rohr umgewälzt wird. Ein entscheidendes Problem des Infrarotsperrfilters besteht darin, dass Wasser zwar eine gute Sperrwirkung für Infrarotstrahlung aufweist, jedoch zugleich eine hohe Sperrwirkung für die UV-Strahlung besitzt, die jedoch für die Strahlungshärtung benötigt wird.

Ausgehend von diesem Stand der Technik liegt der Erfindung daher die Aufgabe zugrunde, einen Filter zur Anordnung im Strahlengang einer Vorrichtung zum UV-Strahlungshärten wärmeempfindlicher Objekte zu schaffen, der mit hohem Wirkungsgrad die Infrarot-Strahlung der Strahlungsquelle ausfiltert, gleichzeitig eine zu starke Erwärmung des Filters selbst vermeidet, jedoch eine hinreichende Durchlässigkeit im UV-Bereich sicherstellt.

Die Lösung dieser Aufgabe basiert auf dem Gedanken, dass die für die Härtung problematische Infrarotstrahlung nicht reflektiert, sondern in dem homogenen Infrarotsperrfilter absorbiert wird. Die von dem insbesondere aus Silikatglas bestehenden Infrarotsperrfilter aufgenommene Infrarotstrahlung wird fortlaufend von einem Kühlmedium abtransportiert. Im Einzelnen wird die Aufgabe bei einem Infrarotsperrfilter der eingangs erwähnten Art dadurch gelöst, dass
- dass der Infrarotsperrfilter als Platte ausgestaltet ist und aus einem homogenen, die Infrarotstrahlung aufnehmenden und für die UV-Strahlung durchlässigen Material besteht,
- dass der hohlzylindrische Kanal eine Zu- und Ableitung für ein den Kanal durchströmendes Kühlmedium aufweist und
- dass das Kühlmedium ein gasförmiges Medium ist.

Der Infrarotsperrfilter ist als Platte ausgestaltet. Eine ebene, flächige und lang gestreckte Platte lässt sich besonders vorteilhaft fertigen und an die jeweilige Bestrahlungsbreite des zu bestrahlenden Objektes anpassen.

Der Infrarotsperrfilter hat eine durchschnittliche Durchlässigkeit im UV-Bereich von mindestens 70 % und eine durchschnittliche Durchlässigkeit im IR-Bereich von höchstens 30 %.

Ein bevorzugter Infrarotsperrfilter hat eine durchschnittliche Durchlässigkeit im UV-Bereich von 82 % und eine durchschnittliche Durchlässigkeit im IR-Bereich von 14 %.

Ein weiterer bevorzugter Infrarotsperrfilter, mit besonders hoher IR-Sperrwirkung, hat eine durchschnittliche Durchlässigkeit im UV-Bereich von 74 % und eine durchschnittliche Durchlässigkeit im IR-Bereich von 6 %.

Der Infrarotsperrfilter besteht aus einem homogenen Material, beispielsweise, eingefärbtem Silikatglas, insbesondere dunkelviolett eingefärbtem Silikatglas.

Der Infrarotsperrfilter ist in einem hohlzylindrischen Kanal angeordnet, der an den Stirnseiten eine Zu- und Ableitung für das den Kanal durchströmende Kühlmedium aufweist. Als Kühlmedium für den Infrarotsperrfilter kommen trotz der besseren Wärmeleitung und -speicherung flüssiger Kühlmedien gasförmige Medien zum Einsatz, da die Verwendung von flüssigen Kühlmedien, insbesondere Kühlwasser, Korrosionsschäden und Undichtigkeiten an den mit Hochspannung betriebenen UV-Strahlungshärtungsvorrichtungen nach sich ziehen kann. Die beste Kühlwirkung des Infrarotsperrfilters wird erzielt, wenn das Kühlmedium den lang gestreckten Kanal ausschließlich in einer Richtung durchströmt. Vorzugsweise ist daher die Zuleitung für das Kühlmedium an einer Stirnseite und die Ableitung an der gegenüberliegenden Stirnseite des hohlzylindrischen Kanals angeordnet. Die Kühlmedium-Versorgung kann beispielsweise mit einem Kompressor oder auch durch ein Lüftergebläse erfolgen. Des Weiteren kann das Kühlmedium über einen Rückkühler über den Kompressor im Kreislauf durch den Kanal geführt werden.

Im einfachsten Fall wird der plattenförmige Infrarotsperrfilter in dem Kanal einfach abgelegt. Um eine unbeabsichtigte Lageveränderung durch das strömende Kühlmedium zu verhindern, kann unterhalb des Infrarotsperrfilters ein für das Medium durchlässiges Stützmaterial, beispielsweise ein Drahtgeflecht angeordnet sein.

Der Kanal besteht aus einem für elektromagnetische Strahlung, nämlich die von der Strahlungsquelle abgegebene elektromagnetische Strahlung durchlässigem, insbesondere durchsichtigem Material. Als durchlässiges Material für den Kanal kommt vorzugsweise durchsichtiges Quarzglas zum Einsatz. Der Kanal muss nicht vollständig aus Quarzglas bestehen, sondern kann insbesondere auch Teilflächen aus Metall, z.B. aus Aluminium aufweisen, wobei die metallischen Teilflächen vorzugsweise nicht im direkten Strahlengang der Strahlungsquelle liegen. Insbesondere die Seitenwände und rahmenartige Teilflächen an Ober- und Unterseite des rechteckigen Kanals können aus Stabilitätsgründen aus Metall bestehen, wobei an den rahmenartigen Teilflächen, die von diesen umgebenen Quarzglasscheiben angeordnet sind. Auch ein metallischer, im Querschnitt runder oder ovaler Kanal kann fensterartige Öffnungen mit Quarzglaseinsätzen an der Ein - und Austrittseite der Strahlung aufweisen, die im Strahlengang der Strahlungsquelle angeordnet sind.

Bei besonders großen Bestrahlungsbreiten kann es produktionstechnisch vorteilhaft sein, den Infrarotsperrfilter mehrteilig auszubilden.

Im Interesse einer bestmöglichen Kühlung fördert die Kühlmedium-Versorgung kontinuierlich Kühlmedium in den hohlzylindrischen Kanal. Sofern die Strahlungsleistung der Strahlungsquelle jedoch gering ist, kann, je nach Anwendung, auch eine periodische Förderung des Kühlmediums genügen, wobei über die zeitliche Periodizität bestimmt wird, wie lange und wie oft das Kühlmedium in dem Bestrahlungszeitraum in den hohlzylindrischen Kanal gefördert wird.

Der erfindungsgemäße Infrarotsperrfilter ist in weiterer Ausgestaltung der Erfindung in einem in Strahlungsrichtung transparenten bzw. die Strahlung nicht oder nur geringfügig beeinträchtigenden Halterungs-Gehäuse angeordnet. Das Gehäuse kann im Querschnitt eckig, oval oder auch rund sein und dient der Aufnahme und Halterung des Kühlkanals mit dem darin befindlichen Infrarotsperrfilter. Außerdem kann das Gehäuse als Halterung für zusätzliche Reflektoren dienen.

Der Infrarotsperrfilter wird insbesondere im Strahlengang zwischen der Strahlungsquelle und dem zu härtenden Objekt einer Vorrichtung zum UV-Strahlungshärten wärmeempfindlicher Objekte mit mindestens einer Strahlungsquelle, deren Licht dem zu härtenden Objekt zum Zwecke der Aushärtung zuführbar ist, angeordnet.

Im Falle der Erstausrüstung der Vorrichtung zum UV-Strahlungshärten kann der Infrarotsperrfilter integraler Bestandteil der Strahlungsvorrichtung sein und zwischen der Strahlungsquelle und der Austrittsöffnung in dem Reflektorgehäuse angeordnet sein.

Wird der Infrarotsperrfilter bei bestehenden Vorrichtungen zum UV-Strahlungshärten nachgerüstet, wird dieser vorzugsweise unterhalb der Austrittsöffnung, beispielsweise mit einer an dem Reflektorgehäuse anschraubbaren Halterung, angeordnet. Dabei ist darauf zu achten, dass der Infrarotsperrfilter möglichst nah an der Austrittsöffnung liegt oder sogar aufgrund der Konstruktion der Halterung in das Reflektorgehäuse hineinreicht, damit die Vorrichtung möglichst nah an das zu härtende Objekt herangebracht werden kann, da lange Strahlungswege zwischen der Strahlungsquelle und dem zu bestrahlenden Objekt zu Strahlungsverlusten führen. Die Intensität von UV-Strahlung nimmt nämlich mit steigender Länge des Bestrahlungsweges ab.

Zur Beeinflussung der Wärmebelastung des zu bestrahlenden Objektes ist es in einer Ausführungsform der erfindungsgemäßen Vorrichtung zum UV-Strahlungshärten vorgesehen, dass der Infrarotsperrfilter nur teilweise in den Strahlengang hineinreicht. Um eine Einstellung der Wärmebelastung des zu bestrahlenden Objektes zu ermöglichen, ist in einer weiteren Ausgestaltung der erfindungsgemäßen Vorrichtung vorgesehen, dass die in den Strahlengang hineinreichende Fläche des Infrarotsperrfilters veränderlich ist, in dem dieser beispielsweise in einem Führungsschlitten verschieblich angeordnet ist, so dass je nach Stellung des Infrarotsperrfilters nur ein mehr oder weniger großer Teil des Strahlengangs durch den Infrarotsperrfilter hindurchgeht.

Für eine fortlaufende Bestrahlung von Objekten, insbesondere Folien und Bahnmaterialien, ist in Richtung des Strahlengangs unterhalb des Infrarotsperrfilters eine Fördereinrichtung angeordnet.

Nachfolgend wird die Erfindung anhand der Zeichnungen näher erläutert.

Es zeigen
- **Figur 1**: eine schematische Vorderansicht eines unterhalb einer Vorrichtung zum UV-Strahlungshärten angeordneten Infrarotsperrfilter,

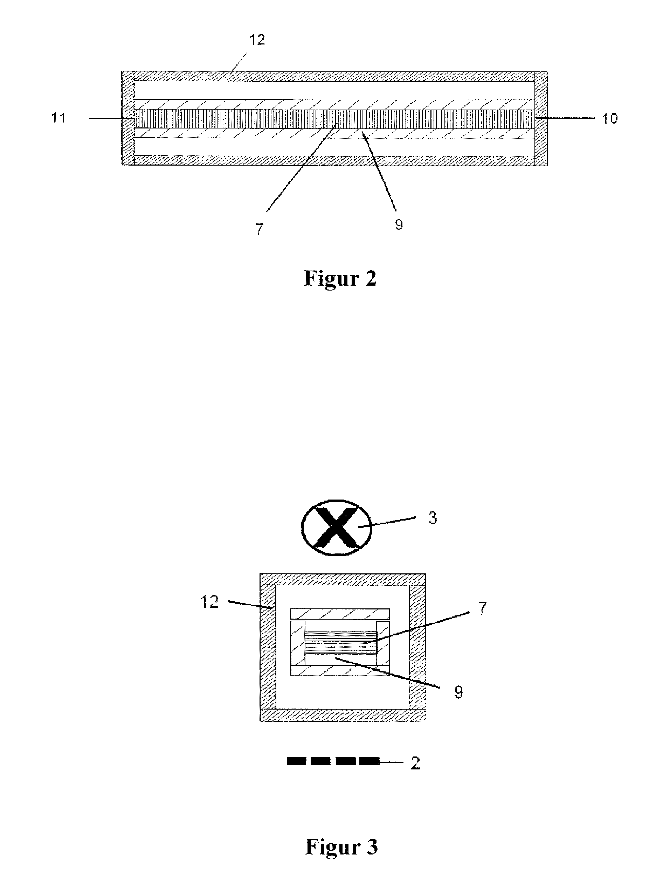

- **Figur 2**: eine vergrößerte Aufsicht auf den Infrarotsperrfilter nach Figur 1 sowie
- **Figur 3**: eine Seitenansicht des Infrarotsperrfilter nach Figur 2.

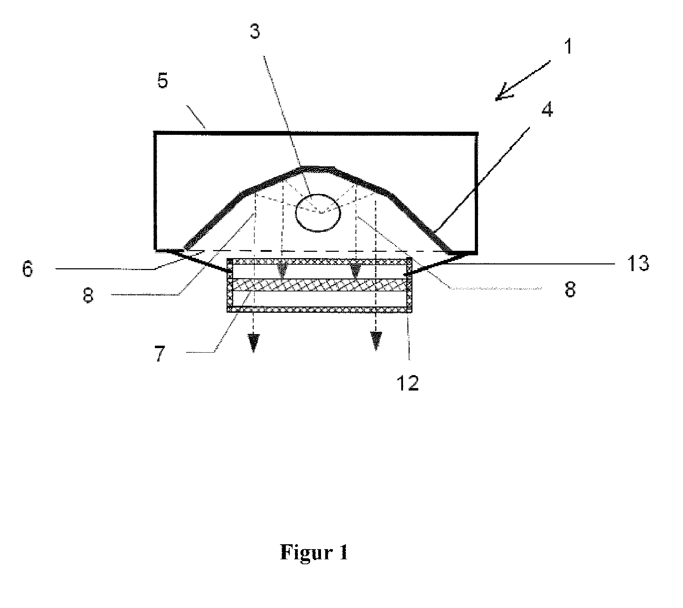

Die Vorrichtung zum UV-Strahlungshärten (1)wärmeempfindlicher Objekte (2) weist eine lang gestreckte UV-Strahlungsquelle (3) auf, deren Licht dem zu härtenden Objekt (2) zum Zwecke der Aushärtung über ein Reflektorsystem (4) zuführbar ist. Das im Querschnitt halbkreisförmige und zylindrisch ausgebildete Reflektorsystem (4) umgibt die Strahlungsquelle (3) und ist in einem Reflektorgehäuse (5) angeordnet. In dem Reflektorgehäuse (5) können an sich bekannte Kühlkanäle zur Abfuhr der Wärme aus dem Reflektorsystem (4) angeordnet sein. Des Weiteren dient das Reflektorgehäuse (5) der Aufnahme der Halterung für die UV-Strahlungsquelle (3) sowie der elektrischen Versorgung und Steuerung. Unmittelbar unterhalb der ebenen, durch die Unterseite des Reflektorgehäuses (5) begrenzten Austrittsöffnung (6) ist der Infrarotsperrfilter (7) im Strahlengang (8) der UV-Strahlungsquelle (3) angeordnet. Der Strahlengang (8) ist in Figur 1 durch die gestrichelten, von der UV-Strahlungsquelle sowie dem Reflektorsystem (4) ausgehenden Linien gekennzeichnet, wobei die Strahlungsrichtung durch die Pfeilspitzen dargestellt wird. Der Infrarotsperrfilter (7) ist in einem hohlzylindrischen Kanal (9) aus Quarzglas mit rechteckigem Querschnitt angeordnet. Selbstverständlich sind auch ovale oder kreisrunde Querschnitte für den Kanal möglich. Die Kanallänge ist, wie aus Figur 1 erkennbar, so bemessen, dass der vollständige Strahlengang (8) durch den Infrarotsperrfilter (7) hindurchgeht. Alternativ ist es jedoch möglich, durch eine kleinere Ausführung oder verschiebliche Anordnung des Infrarotsperrfilters (7) nur ein Teil des Strahlengangs (8) durch den Infrarotsperrfilter (7) hindurchzuführen, während der restliche Teil des Strahlengangs unmittelbar auf das zu bestrahlende Objekt (2) auftrifft. An den Stirnseiten weist der hohlzylindrische Kanal (9) eine Zu- und Ableitung (10, 11) für die den Kanal (9) durchströmende Kühlluft auf, wobei die Zuleitung (10) mit einer Kühlluft-Versorgung verbunden ist. Die Verbindung erfolgt beispielsweise über einen Druckluftschlauch, der an der stirnseitigen Zuleitung (10) angeflanscht wird.

Zur Halterung des den Infrarotsperrfilter (7) aufnehmenden Kanals (9) wird dieser von einem rahmenartigen Gehäuse (12) aufgenommen, dass über Streben (13) mit der Unterseite des Reflektorgehäuses (5) verbunden ist. Das Gehäuse besteht beispielsweise aus einem in Strahlungsrichtung offenen Rechteckrahmen aus Metall, insbesondere Aluminium, in dessen kurzen stirnseitigen Schenkeln Durchgänge zur Aufnahme, insbesondere formschlüssigen Aufnahme, des Kanals (9) angeordnet sind. An den Außenseiten der stirnseitigen Schenkel können fluchtend mit den Durchgängen Anschlussflansche für die Kühlmedium - Versorgung auf der einen Seite und deren Ableitung auf der gegenüberliegenden Seite angeordnet sein.

### Bezugszeichenliste

| **Nr.** | **Bezeichnung** |
|---|---|
| 1. | Vorrichtung zum UV-Strahlungshärten |
| 2. | Objekt |
| 3. | UV-Strahlungsquelle |
| 4. | Reflektorsystem |
| 5. | Reflektorgehäuse |
| 6. | Austrittsöffnung |
| 7. | Infrarotsperrfilter |
| 8. | Strahlengang |
| 9. | Kanal |
| 10. | Zuleitung |
| 11. | Ableitung |
| 12. | Rahmenartigen Gehäuse |
| 13. | Streben |

## Patentansprüche

1. Infrarotsperrfilter zur Anordnung im Strahlengang einer Vorrichtung zum UV-Strahlungshärten wärmeempfindlicher Objekte, wobei der Infrarotsperrfilter in einem hohlzylindrischen Kanal angeordnet ist und der Kanal zumindest teilweise aus einem für elektromagnetische Strahlung durchlässigem Material besteht,
**dadurch gekennzeichnet,**
- **dass** der Infrarotsperrfilter (7) als Platte ausgestaltet ist und aus einem homogenen, die Infrarotstrahlung aufnehmenden und für die UV-Strahlung durchlässigen Material besteht,
- **dass** der hohlzylindrische Kanal (9) eine Zu- und Ableitung (10, 11) für ein den Kanal (9) durchströmendes Kühlmedium aufweist und
- **dass** das Kühlmedium ein gasförmiges Medium ist.

2. Infrarotsperrfilter nach Anspruch 1, **dadurch gekennzeichnet, dass** eine mit der Zuleitung (10) verbundene Kühlmedium-Versorgung Kühlmedium in den hohlzylindrischen Kanal (9) fördert.

3. Infrarotsperrfilter nach Anspruch 2, **dadurch gekennzeichnet, dass** die Kühlmedium-Versorgung kontinuierlich oder periodisch Kühlmedium in den hohlzylindrischen Kanal fördert.

4. Infrarotsperrfilter nach einem der Ansprüche 1 bis 3, **dadurch gekennzeichnet, dass** die Zuleitung (10) an einer Stirnseite und die Ableitung (11) an der gegenüberliegenden Stirnseite des hohlzylindrischen Kanals (9) angeordnet sind.

5. Infrarotsperrfilter nach einem der Ansprüche 1 bis 4, **dadurch gekennzeichnet, dass** der Kanal (9) zumindest teilweise aus durchsichtigem Quarzglas besteht.

6. Infrarotsperrfilter nach einem der Ansprüche 1 bis 5, **dadurch gekennzeichnet, dass** der Infrarotsperrfilter (7) mehrteilig ausgebildet ist.

7. Vorrichtung zum UV-Strahlungshärten wärmeempfindlicher Objekte mit mindestens einer Strahlungsquelle, deren Licht dem zu härtenden Objekt zum Zwecke der Aushärtung zuführbar ist, **dadurch gekennzeichnet, dass** im Strahlengang (8) zwischen der Strahlungsquelle (3) und dem zu härtenden Objekt (2) ein Infrarotsperrfilter (7) nach einem der Ansprüche 1 bis 6 angeordnet ist.

8. Vorrichtung zum UV-Strahlungshärten nach Anspruch 7, **dadurch gekennzeichnet, dass** jede Strahlungsquelle (3) in einem Reflektorgehäuse (5) mit einem Reflektorsystem (4) und einer Austrittsöffnung (6) für die elektromagnetische Strahlung angeordnet ist.

9. Vorrichtung zum UV-Strahlungshärten nach Anspruch 8, **dadurch gekennzeichnet, dass** der Infrarotsperrfilter (7) nur teilweise in den Strahlengang (8) hineinreicht.

10. Vorrichtung zum UV-Strahlungshärten nach Anspruch 8, **dadurch gekennzeichnet, dass** die in den Strahlengang (8) hineinreichende Fläche des Infrarotsperrfilters veränderlich ist.

11. Vorrichtung nach einem der Ansprüche 8 bis 10, **dadurch gekennzeichnet, dass** der Infrarotsperrfilter (7) unterhalb der Austrittsöffnung (6) angeordnet ist.

12. Vorrichtung nach einem der Ansprüche 8bis 10, **dadurch gekennzeichnet, dass** der Infrarotsperrfilter (7) zwischen der Strahlungsquelle (3) und der Austrittsöffnung (6) in dem Reflektorgehäuse (5) angeordnet ist.

13. Vorrichtung nach einem der Ansprüche 7 bis 12, **dadurch gekennzeichnet, dass** in Richtung des Strahlengangs (8) unterhalb des Infrarotsperrfilters (7) eine Fördereinrichtung für die zu bestrahlenden Objekte (2) angeordnet ist.
